# EUROPÄISCHE PATENTSCHRIFT

(11) **EP 3 377 388 B1**
(45) Veröffentlichungstag und Bekanntmachung des Hinweises auf die Patenterteilung: **15.01.2020**
(21) Anmeldenummer: 16798471.5
(22) Anmeldetag: 17.11.2016
(51) Int. Cl.: B60K 5/12, B62D 21/02, B62D 21/15

(54) **SICHERHEITSEINRICHTUNG FÜR EIN FAHRZEUG**
SAFETY DEVICE FOR A VEHICLE
DISPOSITIF DE SÉCURITÉ POUR UN VÉHICULE

(30) Priorität: 17.11.2015 DE 102015222664
(43) Veröffentlichungstag der Anmeldung: 26.09.2018
(73) Patentinhaber: Bayerische Motoren Werke Aktiengesellschaft, 80809 München (DE)
(72) Erfinder: HOFFMAN, Stefan, 80935 München (DE); MAIER, Maximilian, 81545 München (DE); DARRACQ, Dorian, 80339 München (DE); KLÖSER, Torsten, 85716 Unterschleissheim (DE); KOGUT, David, 80803 München (DE); REKTORIK, Peter, 85375 Neufahrn (DE)
(86) Internationale Anmeldenummer: PCT/EP2016/078016
(87) Internationale Veröffentlichungsnummer: WO 2017/085192

(56) Entgegenhaltungen:
- DE-A1-102004 001 747
- DE-A1-102013 208 144
- DE-U1-202014 104 999
- JP-A- H07 187 003
- JP-A- 2003 072 493

## Beschreibung

Die vorliegende Erfindung betrifft eine Sicherheitseinrichtung für ein Fahrzeug, insbesondere für ein Kraftfahrzeug, sowie ein Kraftfahrzeug welches die erfindungsgemäße Sicherheitseinrichtung aufweist.

Kraftfahrzeuge weisen üblicherweise Aufprallschutzelemente auf, welche eine Aufprallkraft im Falle eines Frontzusammenstoßes in einem mittleren Bereich einer Frontseite des Fahrzeugs mit einem Hindernis oder einem anderen Fahrzeug über einen definierten Lastpfad zu hochfesten Trägerbauteilen wie etwa einem Achsträger, einem Motorträger, einem Schweller oder einem Mitteltunnel des Fahrzeugs leiten, um die Aufprallenergie bzw. kinetische Energie des Fahrzeugs zumindest teilweise in Verformungsenergie umzuwandeln.

Im Falle eines Frontalzusammenstoßes bzw. Frontalaufpralls des Fahrzeugs auf ein Hindernis wie etwa auf einen Baum, einen Laternenpfahl oder ein anderes Fahrzeug, bei dem lediglich eine sehr geringe seitliche Überdeckung einer Frontseite des Fahrzeugs mit dem Hindernis vorliegt, kann die Aufprallenergie bei höheren Geschwindigkeiten beispielsweise über eine in dem Radkasten angeordnete Crashbox, die dazu eingerichtet ist sich bereits bei geringen Aufprallgeschwindigkeiten zu verformen, an einen Längsträger wie etwa einen Schweller der Karosserie des Fahrzeugs geleitet werden.

Wenn jedoch eine seitliche Überdeckung des Fahrzeugs mit dem Hindernis etwa 25% einer Breite des Fahrzeugs entspricht, sind üblicherweise keine Lastpfade in dem Fahrzeug vorgesehen, welche die Aufprallkraft auf hochfeste Trägerbauteile leiten, so dass beispielsweise die Vorderräder, die harte Felgen aufweisen, aufgrund der auf sie teilweise übertragenen Aufprallenergie durch die Stirnwand, welche den Motorraum und den Innenraum trennt, in den Fußraum eindringen können, wodurch die Fahrzeuginsassen schwere Verletzungen erleiden können.

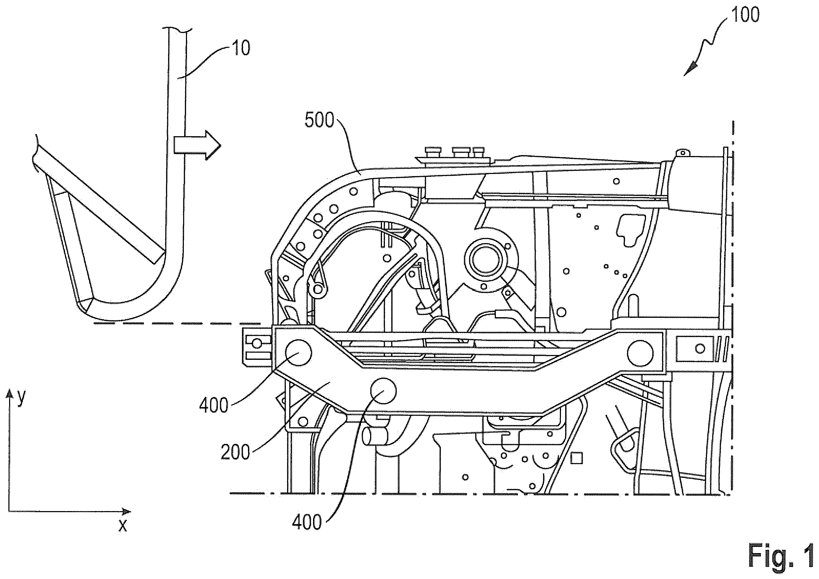

Fig. 1 zeigt eine schematische Ansicht auf eine Unterseite eines herkömmlich ausgebildeten Vorderwagens in Verbindung mit einem Hindernis. Wie in Fig. 1 gezeigt ist beispielsweise ein Achsträger, insbesondere ein Vorderachsträger 200, von dem in Fig. 1 lediglich ein Abschnitt dargestellt ist und der in einem Vorderwagen 100 eines Fahrzeugs anhand von Befestigungsmitteln wie etwa Schrauben 400 mit einer Karosserie und gegebenenfalls mit einem Stützträger 500 eines Radhauses des Fahrzeugs bzw. einem Stützträger-Radhaus 500 des Fahrzeugs verbunden ist, derart angeordnet, dass er in Fahrzeugquerrichtung Y versetzt zu einem Hindernis 10 vorgesehen ist. Daher können der Vorderachsträger 200 und der in Fig. 1 nicht gezeigte Mitteltunnelträger im Falle eines Frontalaufpralls auf das Hindernis 10 mit einer seitlichen Überdeckung von etwa 25% zwischen dem Hindernis 10 und dem Fahrzeug bezogen auf die Fahrzeugbreite keine oder nur eine geringe Aufprallenergie aufnehmen. Der nicht dargestellte Stoßfänger und der Stützträger-Radhaus 500 sind üblicherweise nicht dafür ausgelegt, eine Aufprallenergie bei höheren Geschwindigkeiten in ausreichendem Maße abzubauen, mit der Folge, dass ein nicht dargestelltes Vorderrad in einen nicht dargestellten Fußraum des Fahrzeugs eindringen kann.
Dokument JP H07 187003 A offenbart die Merkmale des Oberbegriffs des Patentanspruchs 1.

Es ist eine Aufgabe der Erfindung eine Sicherheitseinrichtung für ein Fahrzeug bereitzustellen, mit welcher Fahrzeuginsassen bei einem Frontalaufprall eines Fahrzeugs auf ein Hindernis mit einer seitlichen Überdeckung des Fahrzeugs mit dem Hindernis besser vor Verletzungen geschützt werden können.

Diese Aufgabe wird durch eine Sicherheitseinrichtung für ein Fahrzeug gemäß Patentanspruch 1 gelöst.

Weitere bevorzugte Ausführungsformen der Erfindung sind den Unteransprüchen zu entnehmen.

Eine Sicherheitseinrichtung für ein Fahrzeug, insbesondere Kraftfahrzeug, gemäß einer Ausführungsform umfasst einen Achsträger, ein Lastpfaderweiterungselement, das mit dem Achsträger verbunden ist, und ein von dem Lastpfaderweiterungselement unterschiedliches Bauteil des Fahrzeugs, das mit dem Lastpfaderweiterungselement verbunden ist, wobei das Lastpfaderweiterungselement einen vorspringenden Abschnitt aufweist, der dazu eingerichtet ist, bei bestimmungsgemäßem Gebrauch, bei einem Frontalaufprall des Fahrzeugs auf ein Hindernis mit einer innerhalb eines vorgegebenen Bereichs mit Bezug auf eine Fahrzeugbreite seitlichen Überdeckung des Fahrzeugs mit dem Hindernis eine durch den Frontalaufprall auftretende Aufprallkraft aufzunehmen, und der gegenüber dem Achsträger quer zu einer Fahrzeuglängsrichtung in Richtung einer bezüglich des Hindernisses nahe gelegenen seitlichen Fahrzeugaußenkante vorspringt, und die Sicherheitseinrichtung derart eingerichtet ist, dass ein Teil der aufgenommenen Aufprallkraft in den Achsträger geleitet wird, und ein anderer Teil der aufgenommenen Aufprallkraft in das Bauteil des Fahrzeugs geleitet wird.

Dabei kann der vorgegebene Bereich der seitlichen Überdeckung einen Bereich zwischen einem ersten Wert, der 25% einer Breite des Fahrzeugs plus 20 mm gemessen von einer bezüglich des Hindernisses nahe gelegenen seitlichen Fahrzeugaußenkante entspricht, und einem zweiten Wert, der 25% der Breite des Fahrzeugs minus 20 mm gemessen von der bezüglich des Hindernisses nahe gelegenen seitlichen Fahrzeugaußenkante entspricht, umfassen.

Durch die Übertragung von Teilen der von dem vorspringenden Abschnitt des Lastpfaderweiterungselements aufgenommenen Aufprallkraft auf den Achsträger und das Bauteil des Fahrzeugs, welches bevorzugt nahe dem Lastpfaderweiterungselement bzw. umliegend angeordnet ist, werden der Achsträger und das umliegende Bauteil plastisch deformiert, wodurch in diesen entsprechende Teile der Aufprallenergie abgebaut werden können.

Weiterhin können durch die Anbindung des Lastpfaderweiterungselements an den Achsträger und das umliegende Bauteil die Anforderungen an die Belastbarkeit der Verbindung zwischen dem Lastpfaderweiterungselement und dem Achsträger im Vergleich zu einem Fall, bei dem das Lastpfaderweiterungselement nur an den Achsträger angebunden ist, erheblich verringert werden.

Um die Übertragung der aufgenommenen Aufprallkraft von dem Lastpfaderweiterungselement auf den Achsträger und auf das umliegende Bauteil zu ermöglichen, ist das Lastpfaderweiterungselement direkt oder indirekt fest mit dem Achsträger und dem umliegenden Bauteil verbunden.

Dabei kann das umliegenden Bauteil mittels Schrauben, Formschluss oder durch Verschweißen mit dem Lastpfaderweiterungselement verbunden sein.

Bevorzugt ist das umliegende Bauteil als hochfestes Strukturbauteil des Fahrzeugs ausgebildet, beispielsweise als ein Motorträger, als ein Deformationselement, als ein Stoßfängerquerträger, als ein Stützträger eines Radhauses bzw. als ein Stützträger-Radhaus, als eine Strukturstrebe, als eine Pfahlsperre oder als ein Zugstrebenlager.

Erfindungsgemäß umfasst die Sicherheitseinrichtung ferner ein Abstützelement, welches mit dem Lastpfaderweiterungselement und dem umliegenden Bauteil verbunden ist, und dazu eingerichtet ist, den anderen Teil der aufgenommenen Aufprallkraft von dem Lastpfaderweiterungselement auf das Bauteil des Fahrzeugs zu übertragen.

Dabei ist das Abstützelement bevorzugt fest an dem vorspringenden Abschnitt des Lastpfaderweiterungselements befestigt. Durch diese Ausgestaltung kann eine Gefahr, dass das Lastpfaderweiterungselement bei Aufnahme der Aufprallenergie seitlich, d.h. in Fahrzeugquerrichtung, oder nach oben bzw. unten, d.h. in Fahrzeughöhenrichtung, abknickt und somit die Aufprallkraft nur in geringem Maße auf das umliegende Bauteil übertragen würde, verringert werden.

Das Abstützelement kann mit dem umliegenden Bauteil des Fahrzeugs mittels zumindest einer Schraube verbunden sein. Zusätzlich oder alternativ dazu kann das Abstützelement mit dem umliegenden Bauteil des Fahrzeugs durch Formschluss verbunden sein.

Bevorzugt ist das umliegende Bauteil des Fahrzeugs in einer Fahrzeughöhenrichtung beabstandet von dem Lastpfaderweiterungselement angeordnet. Zusätzlich oder alternativ dazu kann das umliegende Bauteil des Fahrzeugs in einer Fahrzeugquerrichtung beabstandet von dem Lastpfaderweiterungselement angeordnet sein.

Gemäß einer Ausführungsform sind das Lastpfaderweiterungselement und das Abstützelement einstückig, d. h. aus einem Stück gebildet.

Zur Verstärkung der Anbindung des Abstützelements an das Lastpfaderweiterungselement kann das Abstützelement einen sich quer zu der Fahrzeuglängsrichtung erstreckenden Verbindungsabschnitt aufweisen, wobei der Verbindungsabschnitt flächig mit dem Lastpfaderweiterungselement verbunden ist.

Ein Fahrzeug, insbesondere Kraftfahrzeug, gemäß einer Ausführungsform weist eine der vorangehend beschriebenen Sicherheitseinrichtungen auf.

Im Folgenden werden anhand der zugehörigen Zeichnungen Ausführungsformen erfindungsgemäßer Sicherheitseinrichtung für ein Fahrzeug genauer beschrieben.

Es zeigen:
Fig. 1 eine schematische Darstellung zur Erläuterung der Auswirkungen eines Frontalaufpralls eines herkömmlich ausgebildeten Vorderwagens auf ein Hindernis bei geringer seitlicher Überdeckung des Vorderwagens mit dem Hindernis,
Fig. 2 eine schematische Darstellung zur Erläuterung der Auswirkungen eines Frontalaufpralls eines mit einer Sicherheitseinrichtung gemäß einer Ausführungsform ausgestatteten Vorderwagens auf ein Hindernis bei geringer seitlicher Überdeckung des Vorderwagens mit dem Hindernis,
Fig. 3 eine schematische Darstellung zur Erläuterung einer Sicherheitseinrichtung gemäß einer Ausführungsform,
Fig. 4 eine schematische Darstellung zur Erläuterung einer Sicherheitseinrichtung gemäß einer Ausführungsform,
Fig. 5 eine schematische Darstellung zur Erläuterung einer Sicherheitseinrichtung gemäß einer Ausführungsform,
Fig. 6 eine schematische Darstellung zur Erläuterung einer Sicherheitseinrichtung gemäß einer Ausführungsform, und
Fig. 7 eine schematische Detailansicht der in Fig. 6 gezeigten Sicherheitseinrichtung.

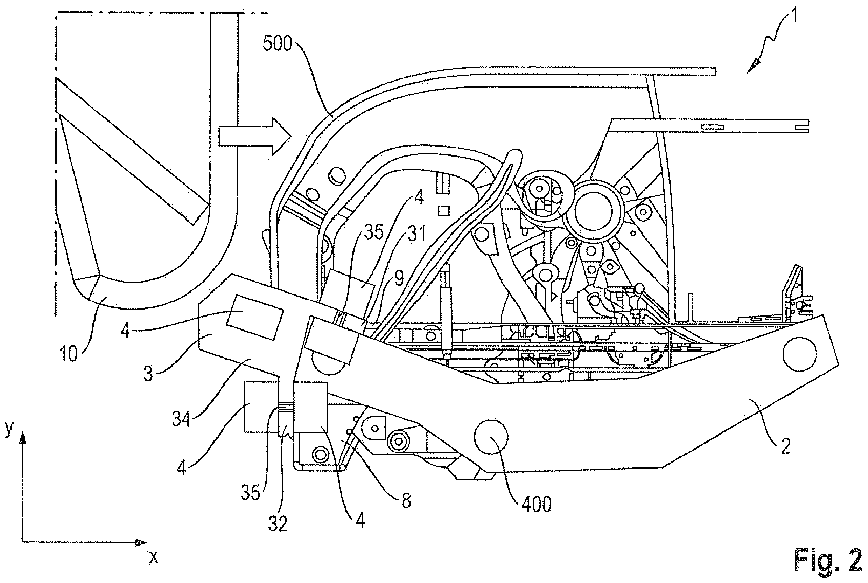

Fig. 2 zeigt eine schematische Ansicht auf eine Unterseite eines Vorderwagen 1 eines mit einer erfindungsgemäßen Sicherheitseinrichtung ausgerüsteten Fahrzeugs im Falle eines Aufpralls des Fahrzeugs auf ein Hindernis 10 bei geringer seitlicher Überdeckung des Vorderwagens 1 mit dem Hindernis 10. Der Vorderwagen 1 weist einen Stützträger 500 eines Radhauses bzw. einen Stützträger-Radhaus 500, einen Achsträger 2, von dem in Fig. 2 lediglich ein Abschnitt dargestellt ist und der ein Querverbindungselement 8 umfasst, einen nicht dargestellten Stoßfänger sowie weitere nicht dargestellte Teile auf.

Der Achsträger, insbesondere Vorderachsträger bzw. Fahrschemel 2, an dem beispielsweise Teile der Lenkung des Fahrzeugs, der Motorträger oder Ähnliches befestigt sind, ist mittels Schrauben 400 direkt oder indirekt über Gummilager an dem Stützträger-Radhaus 500 und einer Karosserie des Fahrzeugs befestigt.

Das in den Fig. 1, 2 und 5 bis 7 dargestellte Hindernis 10 kann beispielsweise als eine Barriere ausgebildet sein, welche derjenigen entspricht, die bei einem Test zur Bestimmung eines Aufprallenergieaufnahmevermögens eines Fahrzeugs bei einem Frontalaufprall mit geringer seitlicher Überdeckung des Fahrzeugs mit dem Hindernis (Small Overlap Frontal Crash Test), welcher von dem Insurance Institute for Highway Safety eingeführt wurde, verwendet wird.

Bei diesem Test fährt ein Fahrzeug mit 40 Meilen/h auf das Hindernis 10 zu, wobei eine seitliche Überdeckung des Hindernisses mit dem Fahrzeug etwa 25 % der Fahrzeugbreite gemessen von einer Außenkante des Fahrzeugs entspricht. Dabei ist in dem Fahrzeug eine Vielzahl von Sensoren angeordnet, um die Beschleunigungskräfte während des Aufpralls zu messen. Nach dem Aufprall werden zudem die Verformungen des Fahrzeugs vermessen, und anschließend wird anhand einer Vielzahl von Kriterien die von dem Fahrzeug bereitgestellte Sicherheit eingestuft.

Um zu verhindern, dass das Vorderrad oder andere Teile durch die Stirnwand in den Fahrgastraum, insbesondere den Fußraum des Fahrzeugs eindringen, ist in dem Vorderwagen 1 eine Sicherheitseinrichtung vorgesehen, welche den Achsträger 2, ein Lastenpfaderweiterungselement 3, und zumindest ein von dem Achsträger 2 und dem Lastpfaderweiterungselement 3 unterschiedliches Bauteil 9, insbesondere Strukturbauteil, des Fahrzeugs umfasst.

Das Lastpfaderweiterungselement 3 weist einen vorspringenden Abschnitt auf, der gegenüber dem bzw. mit Bezug auf den Achsträger 2 quer zu einer Fahrzeuglängsrichtung X bzw. entlang einer Fahrzeugquerrichtung Y in Richtung der seitlichen Außenkante des Fahrzeugs vorspringt, welche von dem Hindernis 10 überdeckt wird bzw. welche dem Hindernis 10 nahe gelegen ist. Der vorspringende Abschnitt des Lastpfaderweiterungselements 3 ist insbesondere dazu eingerichtet, bei einem Frontalaufprall des Fahrzeugs auf ein Hindernis 10 mit einer innerhalb eines vorgegebenen Bereichs mit Bezug auf eine Fahrzeugbreite seitlichen Überdeckung des Fahrzeugs mit dem Hindernis eine durch den Frontalaufprall auftretende Aufprallkraft aufzunehmen.

Bei einer Ausführungsform kann der vorgegebene Bereich beispielsweise einen Bereich zwischen einem ersten Wert, der 25% einer Breite des Fahrzeugs plus 20 mm gemessen von der von dem Hindernis überdeckten Fahrzeugseite bzw. seitlichen Außenkante des Fahrzeugs entspricht, und einem zweiten Wert, der 25% der Breite des Fahrzeugs minus 20 mm gemessen von der von dem Hindernis überdeckten Fahrzeugseite bzw. -außenkante entspricht, umfassen.

Der vorspringende Abschnitt des Lastpfaderweiterungselements 3 ist derart angeordnet, dass er sich in Fahrzeuglängsrichtung X gesehen vor dem Vorderrad und vorzugsweise zumindest teilweise vor dem Stützträger-Radhaus 500 befindet. Auf diese Weise kann das Lastpfaderweiterungselement 3 bei dem Frontalaufprall mit geringer seitlicher Überdeckung die auftretende Aufprallkraft aufnehmen, bevor die Aufprallkraft durch das Hindernis 10 auf den Stützträger-Radhaus 500 bzw. das Vorderrad übertragen wird.

Die Sicherheitseinrichtung ist derart eingerichtet, dass ein Teil der von dem Lastpfaderweiterungselement 3 aufgenommenen Aufprallkraft in den Achsträger 2 geleitet wird, und ein anderer Teil der von dem Lastpfaderweiterungselement 3 aufgenommenen Aufprallkraft in zumindest eines der umliegenden bzw. dem Lastpfaderweiterungselement 3 nahe gelegenen Bauteile 9 geleitet wird. Durch die Übertragung von Teilen der Aufprallkraft auf den Achsträger 2 und das zumindest eine umliegende Bauteil 9 werden der Achsträger 2 und das zumindest eine umliegende Bauteil 9 plastisch deformiert, wodurch in diesen entsprechende Teile der Aufprallenergie abgebaut werden.

Um die Übertragung der aufgenommenen Aufprallkraft von dem Lastpfaderweiterungselement 3 auf den Achsträger 2 und das als Längsträger eines Motorträgers bzw. Motorlängsträger ausgebildete Bauteil 9 zu ermöglichen, ist das Lastpfaderweiterungselement 3 direkt oder indirekt fest mit dem Achsträger 2 und dem Motorlängsträger 9 verbunden.

Durch die Anbindung des Lastpfaderweiterungselements 3 an den Achsträger 2 und das zumindest eine umliegende Bauteil 9 können die Anforderungen an die Belastbarkeit der Verbindung zwischen dem Lastpfaderweiterungselement 3 und dem Achsträger 2 im Vergleich zu einem Fall, bei dem das Lastpfaderweiterungselement 3 nur an den Achsträger 2 angebunden ist, erheblich verringert werden.

Bei der in Fig. 2 dargestellten Sicherheitseinrichtung sind der Achsträger 2 und das Lastpfaderweiterungselement 3 als separate Bauteile ausgebildet, welche fest miteinander verbunden sind. Die feste Verbindung zwischen dem Achsträger 2 und dem Lastpfaderweiterungselement 3 kann beispielsweise mittels nicht dargestellter Schrauben und/oder Schweißen erfolgen.

Bevorzugt weist das als separates Bauteil ausgeführte Lastpfaderweiterungselement 3 eine höhere Festigkeit als der Achsträger 2 auf. Dabei kann das Material, aus dem das Lastpfaderweiterungselement 3 gebildet ist, eine höhere Festigkeit als das Material aufweisen, aus dem der Achsträger 2 gebildet ist. Beispielsweise kann das Lastpfaderweiterungselement 3 aus einem geschmiedeten Stahl bestehen, während der Achsträger 2 beispielsweise aus Aluminiumguss gefertigt sein kann.

Bei einer anderen, nicht dargestellten Ausführungsform kann das Lastpfaderweiterungselement 3 auch integral bzw. einstückig mit dem Achsträger 2 ausgebildet sein, das heißt, dass in diesem Fall das Lastpfaderweiterungselement 3 ein Bestandteil des Achsträgers 2 ist.

Das Lastpfaderweiterungselement 3 weist einen ersten Befestigungsabschnitt 31 auf, welcher sich von einem mit Bezug auf die Fahrtrichtung -X vorderen bzw. einer Frontseite des Fahrzeugs nahe gelegenen Ende des Achsträgers 2 schräg zu der Fahrzeuglängsrichtung X in Richtung eines hinteren Endes des Fahrzeugs erstreckt, und in welchem ein Durchgangsloch 35 vorgesehen ist. An dem ersten Befestigungsabschnitt 31 des Lastpfaderweiterungselements 3 ist beispielsweise mittels einer nicht dargestellten Schraube, welche durch das Durchgangsloch 35 hindurch geht, ein Abstützelement 4 befestigt, das mit dem Motorlängsträger 9 beispielsweise durch Schweißen oder mittels nicht dargestellter Schrauben fest verbunden ist.

Das Lastpfaderweiterungselement 3 weist ferner einen zweiten Befestigungsabschnitt 32 auf, welcher sich von dem vorderen Ende des Achsträgers 2 entlang der Fahrzeugquerrichtung Y in Richtung einer entfernt von dem Hindernis 10 gelegenen seitlichen Fahrzeugaußenkante erstreckt, und in welchem ein Durchgangsloch 35 vorgesehen ist. An dem zweiten Befestigungsabschnitt 32 des Lastpfaderweiterungselements 3 ist beispielsweise mittels einer nicht dargestellten Schraube, welche durch das Durchgangsloch 35 hindurch geht, ein Abstützelement 4 befestigt, das mit dem Querverbindungselement 8 des Achsträgers 2 beispielsweise durch Schweißen oder mittels nicht dargestellter Schrauben fest verbunden ist.

Des Weiteren ist wie in Fig. 2 schematisch veranschaulicht an einem sich in einer durch die Fahrzeuglängsrichtung X und die Fahrzeugquerrichtung Y aufgespannten Ebene erstreckenden Hauptabschnitt 34 des Lastpfaderweiterungselements 3, insbesondere an dem vorspringenden Abschnitt des Lastpfaderweiterungselements 3, ein Abstützelement 4 befestigt, welches mit einem in einer Fahrzeughöhenrichtung beabstandet von dem Lastpfaderweiterungselement 3 vorgesehenen nicht gezeigten umliegenden Bauteil des Fahrzeugs verbunden ist. Durch diese Art der Anbindung kann eine Gefahr, dass das Lastpfaderweiterungselement 3 bei Aufnahme der Aufprallenergie seitlich, d.h. in Fahrzeugquerrichtung Y, oder nach oben bzw. unten, d.h. in Fahrzeughöhenrichtung, abknickt und somit die Aufprallkraft nur in geringem Maße an die umliegenden Bauteile 2, 9 übertragen würde, verringert werden.

Infolge des Abbaus von kinetischer Energie durch die Deformation des Achsträgers 2 und des Motorlängsträgers 9 wird die Auftreffgeschwindigkeit des Hindernisses 10 auf die Stirnwand des Fahrzeugs reduziert. Zusätzlich wird das Hindernis 10 über das Lastpfaderweiterungselement 3, den Achsträger 2 und den Motorlängsträger 9 abgestützt und somit das Fahrzeug relativ zu dem Hindernis 10 in Fahrzeugquerrichtung Y verschoben. Dadurch kann das Fahrzeug an dem Hindernis 10 abgleiten, wodurch die auf das Fahrzeug wirkende Aufprallkraft weiter verringert wird.

Folglich kann durch das Vorsehen der das Lastpfaderweiterungselement 3, den Achsträger 2 und den Motorlängsträger 9 umfassenden Sicherheitseinrichtung die Gefahr eines Eindringens von Fahrzeugteilen wie etwa der Vorderräder durch die Stirnwand in den Fahrgastraum verringert werden, wodurch die Insassenbelastungen reduziert werden können.

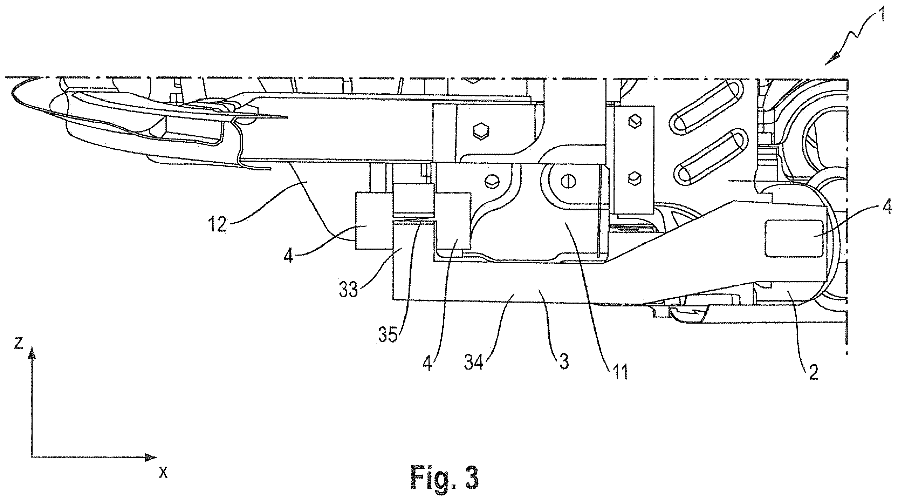

Mit Bezug auf Fig. 3 weist gemäß einer Ausführungsform einer Sicherheitseinrichtung das Lastpfaderweiterungselement 3 an seinem vorderen Ende einen Befestigungsabschnitt 33 auf, welcher sich ausgehend von einem sich in einer durch die Fahrzeuglängsrichtung X und die Fahrzeugquerrichtung Y aufgespannten Ebene erstreckenden Hauptabschnitt 34 entlang einer Fahrzeughöhenrichtung Z erstreckt, und in welchem ein sich in Fahrzeuglängsrichtung X erstreckendes Durchgangsloch 35 vorgesehen ist. An dem Befestigungsabschnitt 33 des Lastpfaderweiterungselements 3 ist beispielsweise mittels einer nicht dargestellten Schraube, welche durch das Durchgangsloch 35 hindurch geht, ein Abstützelement 4 befestigt, das mit einem umliegenden Bauteil 11 des Fahrzeugs, welches beispielsweise als Pfahlsperre ausgebildet ist, und einem umliegenden Bauteil 12 des Fahrzeugs, welches beispielsweise als Strukturstrebe bzw. Keilstrebe ausgebildet ist, beispielsweise durch Schweißen oder mittels nicht dargestellter Schrauben fest verbunden ist.

Bei dieser Ausführungsform wird somit ein Teil der von dem Lastpfaderweiterungselement 3 aufgenommenen Aufprallkraft in den Achsträger 2 geleitet, und andere Teil der von dem Lastpfaderweiterungselement 3 aufgenommenen Aufprallkraft werden über den Befestigungsabschnitt 33 und das Abstützelement 4 in die umliegenden bzw. dem Lastpfaderweiterungselement 3 nahe gelegenen Bauteile 11, 12 geleitet, wobei zusätzlich die Gefahr des Abknickens des Lastpfaderweiterungselements 3 in Fahrzeugquerrichtung Y bzw. in Fahrzeughöhenrichtung Z verringert werden kann.

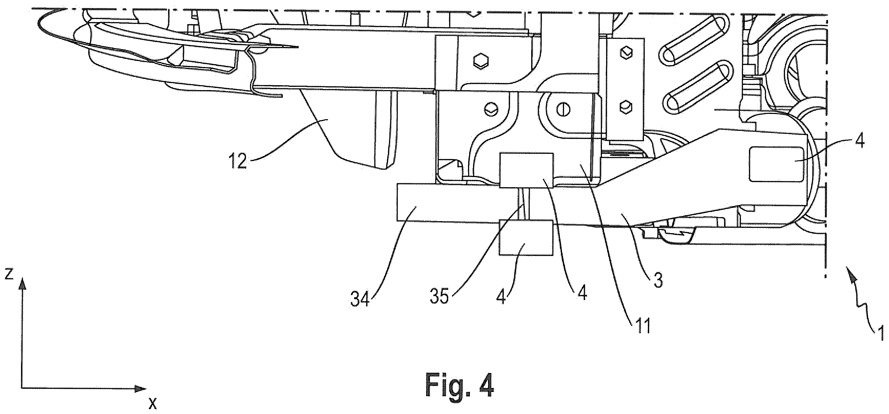

Bei einer in Fig. 4 dargestellten Ausführungsform einer Sicherheitseinrichtung ist in einem sich in einer durch die Fahrzeuglängsrichtung X und die Fahrzeugquerrichtung Y aufgespannten Ebene erstreckenden Hauptabschnitt 34 des Lastpfaderweiterungselements 3 ein Durchgangsloch 35 vorgesehen, welches sich entlang der Fahrzeughöhenrichtung Z erstreckt. An dem Hauptabschnitt 34 des Lastpfaderweiterungselement 3 ist beispielsweise mittels einer nicht dargestellten Schraube, welche durch das Durchgangsloch 35 hindurch geht, ein Abstützelement 4 befestigt, das mit dem beispielsweise als Pfahlsperre ausgebildeten Bauteil 11 des Fahrzeugs beispielsweise durch Schweißen oder mittels nicht dargestellter Schrauben fest verbunden ist.

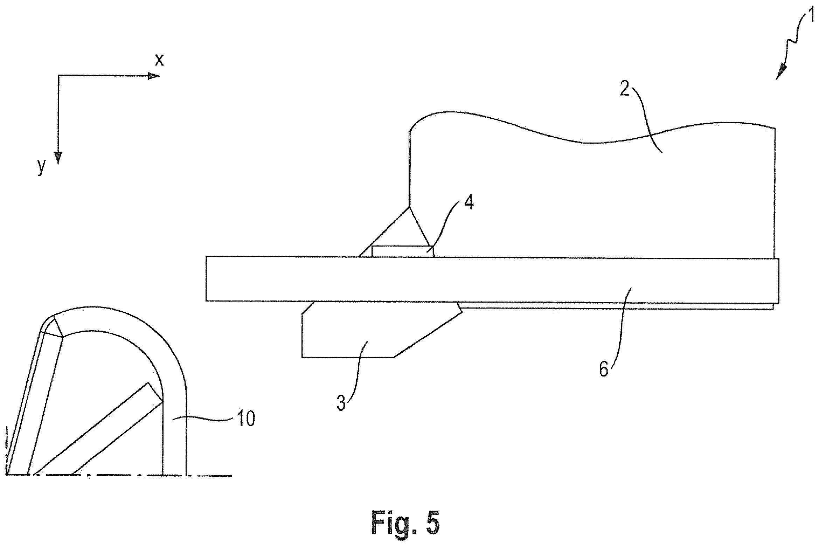

Mit Bezug auf Fig. 5, welche eine schematische Draufsicht auf einen mit einer Sicherheitseinrichtung gemäß einer Ausführungsform ausgerüsteten Vorderwagen 1 eines Fahrzeugs zeigt, kann das Lastpfaderweiterungselement 3 mit einem als sich in Fahrzeuglängsrichtung X erstreckenden Profilteil 6 des Motorträgers ausgebildeten ersten umliegenden Bauteil und einem als Deformationselement (nicht gezeigt in Fig. 5) ausgebildeten zweiten umliegenden Bauteil mittels eines einzelnen Abstützelements 4, sowie dem Achsträger 2 verbunden sein. Die jeweiligen Anbindungen bzw. Verbindungen zwischen dem Lastpfaderweiterungselement 3 und dem Achsträger 2, zwischen dem Lastpfaderweiterungselement 3 und dem Abstützelement 4, und zwischen dem Abstützelement 4 und dem Profilteil 6 des Motorträgers bzw. dem Deformationselement können entsprechend den mit Bezug auf die Fig. 2 bis 4 beschriebenen Verbindungen ausgeführt sein.

Bei dieser Ausführungsform ist das Lastpfaderweiterungselement 3 an entlang der Fahrzeughöhenrichtung Z beabstandet angeordneten umliegenden Bauteilen, insbesondere an das Deformationselement und an das Profilteil 6 des Motorträgers, über das Abstützelement 4 angebunden.

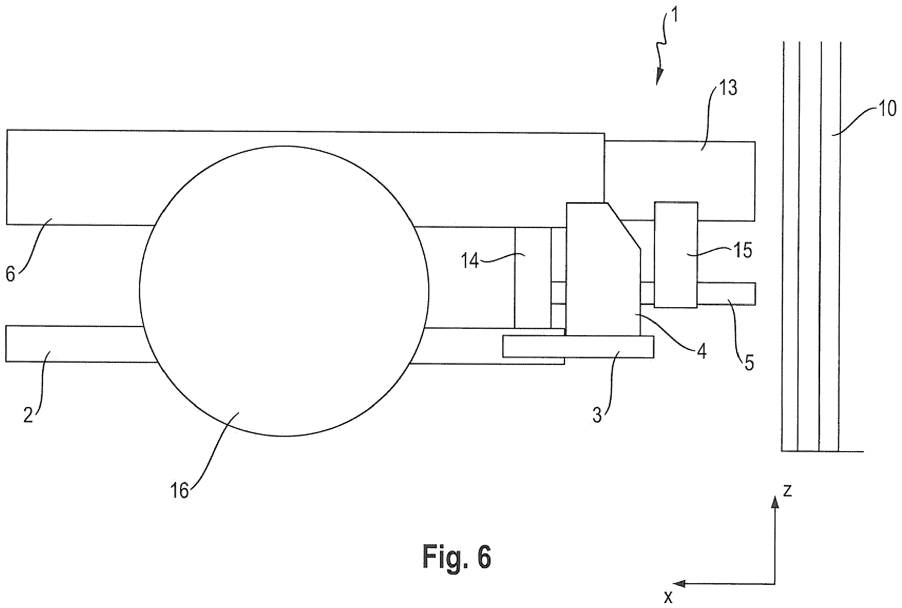

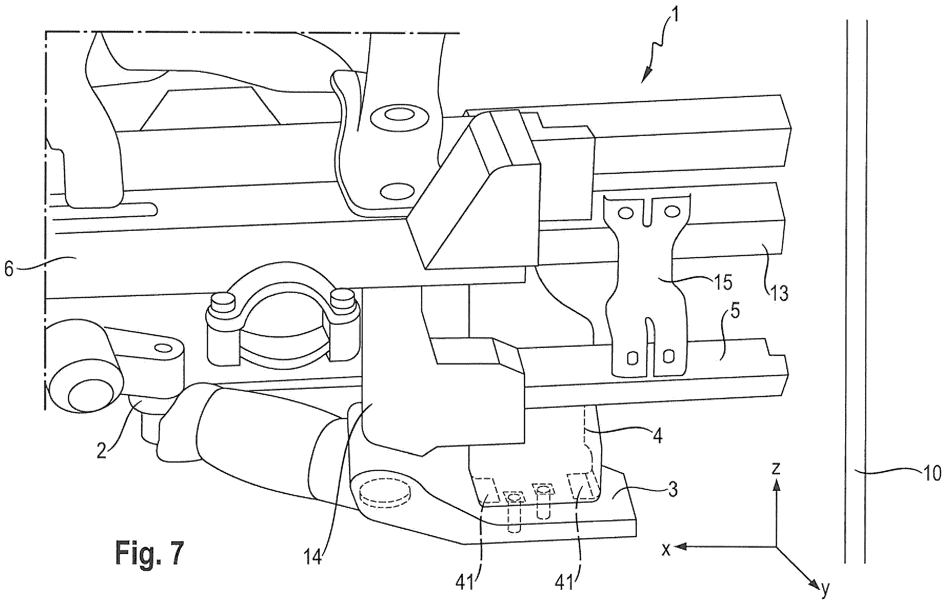

Fig. 6 ist eine schematische Seitenansicht eines mit einer Sicherheitseinrichtung gemäß einer Ausführungsform ausgestatteten Vorderwagens 1, und Fig. 7 ist eine schematische perspektivische Detailansicht von Teilen des in Fig. 6 gezeigten Vorderwagens 1.

Der Vorderwagen 1 weist einen Achsträger bzw. eine Vorderachse 2, an der ein Vorderrad 16 aufgehängt ist, und an der ein Lastpfaderweiterungselement 3 ähnlich wie mit Bezug auf die Fig. 2 bis 5 beschrieben befestigt ist, sowie ein Profilteil 6 des Motorträgers auf. Das Profilteil 6 des Motorträgers ist mittels eines sich in Fahrzeughöhenrichtung Z erstreckenden ersten Verbindungselements 14 an den Achsträger 2 angebunden. An einem vorderen Ende des Profilteils 6 des Motorträgers ist ein erstes Deformationselement 13 angeordnet, welches dafür vorgesehen ist, eine Aufprallkraft im Falle eines Frontalzusammenstoßes in einem mittleren Bereich der Frontseite des Fahrzeugs mit einem Hindernis oder einem anderen Fahrzeug aufzunehmen und in das Profilteil 6 des Motorträgers zu leiten. An dem Achsträger 2 ist beispielsweise mittels Schrauben und/oder Schweißen ein zweites Deformationselement 5 befestigt, welches sich von einem vorderen Ende des Achsträgers 2 in Richtung einer Frontseite des Fahrzeugs erstreckt und dazu vorgesehen ist, eine Aufprallkraft im Falle eines entsprechenden Frontalzusammenstoßes aufzunehmen und in den Achsträger 2 zu leiten. Dabei ist das zweite Deformationselement 5 insbesondere in Fahrzeugquerrichtung Y gesehen zwischen dem vorspringenden Abschnitt des Lastpfaderweiterungselements 3 und dem ersten Deformationselement 13 vorgesehen.

Um die auf eines des ersten und des zweiten Deformationselements 13, 5 wirkende Aufprallkraft zumindest teilweise auf das jeweilige andere des ersten und des zweiten Deformationselements 13, 5 zu übertragen sind das erste und das zweite Deformationselement 13, 5 mittels eines zweiten Verbindungselements 15 verbunden, welches an dem ersten und dem zweiten Deformationselement 13, 5 befestigt ist, beispielsweise mittels Schrauben und/oder Schweißen und/oder Formschluss.

Zur Übertragung von Teilen der auf den vorspringenden Abschnitt des Lastpfaderweiterungselements 3 wirkenden Aufprallkraft auf die umliegenden Bauteile, insbesondere auf das Profilteil 6 des Motorträgers und das zweite Deformationselement 5, und zur Verringerung der Gefahr, dass das Lastpfaderweiterungselement 3 bei dem Frontalzusammenstoß mit geringer seitlicher Überdeckung seitlich bzw. nach oben oder unten wegknickt, ist der vorspringende Abschnitt des Lastpfaderweiterungselements 3 mittels eines Abstützelements 4 mit dem Profilteil 6 des Motorträgers und dem zweiten Deformationselements 5 verbunden. Dabei weist das Abstützelement 4 sich entlang der Fahrzeugquerrichtung Y erstreckende Verbindungsabschnitte 41 auf, welche flächig mit dem vorspringenden Abschnitt des Lastpfaderweiterungselements 3 verbunden sind. Die Verbindung zwischen den Verbindungsabschnitten 41 und dem vorspringenden Teil des Lastpfaderweiterungselements 3 kann beispielsweise mittels Schrauben und/oder wie in Fig. 7 veranschaulicht durch Schweißen hergestellt werden. Bei einer nicht gezeigten Ausführungsform können das Lastpfaderweiterungselement 3 und das Abstützelement 4 auch einstückig, das heißt aus einem Stück gefertigt sein. Zur Verbindung des Abstützelements 4 mit dem Profilteil 6 des Motorträgers und dem zweiten Deformationselement 5 sind in dem Abstützelement 4, dem Profilteil 6 des Motorträgers und dem zweiten Deformationselement 5 entsprechende nicht gezeigte Schraubenlöcher vorgesehen, durch welche nicht gezeigte Schrauben hindurchgeführt und beispielsweise mittels nicht gezeigter Muttern befestigt sind.

## Patentansprüche

1. Sicherheitseinrichtung für ein Fahrzeug, insbesondere Kraftfahrzeug, umfassend
einen Achsträger (2),
ein Lastpfaderweiterungselement (3), das mit dem Achsträger (2) verbunden ist, und
ein von dem Lastpfaderweiterungselement (3) unterschiedliches Bauteil (5, 6, 9, 11, 12, 500) des Fahrzeugs, das mit dem Lastpfaderweiterungselement (3) verbunden ist, wobei
das Lastpfaderweiterungselement (3) einen vorspringenden Abschnitt aufweist, der dazu eingerichtet ist, bei bestimmungsgemäßem Gebrauch, bei einem Frontalaufprall des Fahrzeugs auf ein Hindernis (10) mit einer innerhalb eines vorgegebenen Bereichs mit Bezug auf eine Fahrzeugbreite seitlichen Überdeckung des Fahrzeugs mit dem Hindernis (10) eine durch den Frontalaufprall auftretende Aufprallkraft aufzunehmen, und der gegenüber dem Achsträger (2) quer zu einer Fahrzeuglängsrichtung (X) in Richtung einer bezüglich des Hindernisses (10) nahe gelegenen seitlichen Fahrzeugaußenkante vorspringt, und
die Sicherheitseinrichtung derart eingerichtet ist, dass ein Teil der aufgenommenen Aufprallkraft in den Achsträger (2) geleitet wird, und ein anderer Teil der aufgenommenen Aufprallkraft in das Bauteil (5, 6, 9, 11, 12, 500) des Fahrzeugs geleitet wird,
**dadurch gekennzeichnet, dass**
die Sicherheitseinrichtung ein Abstützelement (4) aufweist, welches mit dem Lastpfaderweiterungselement (3) und dem Bauteil (5, 6, 9, 11, 12, 500) des Fahrzeugs verbunden ist, und dazu eingerichtet ist, den anderen Teil der aufgenommenen Aufprallkraft von dem Lastpfaderweiterungselement (3) auf das Bauteil (5, 6, 9, 11, 12, 500) des Fahrzeugs zu übertragen.

2. Sicherheitseinrichtung gemäß Anspruch 1, bei der das Bauteil (5, 6, 9, 11, 12, 500) des Fahrzeugs mittels Schrauben, Formschluss oder durch Verschweißen mit dem Lastpfaderweiterungselement (3) verbunden ist.

3. Sicherheitseinrichtung gemäß einem der Ansprüche 1 oder 2, bei der das Bauteil des Fahrzeugs ein als Motorträger (6, 9), als Deformationselement (5), als Stoßfängerquerträger, als Stützträger-Radhaus (500), als eine Strukturstrebe (12), als eine Pfahlsperre (11), oder als Zugstrebenlager ausgebildetes Strukturbauteil des Fahrzeugs ist.

4. Sicherheitseinrichtung gemäß einem der Ansprüche 1 bis 3, bei der das Abstützelement (4) fest an dem vorspringenden Abschnitt des Lastpfaderweiterungselements (3) befestigt ist.

5. Sicherheitseinrichtung gemäß einem der Ansprüche 1 bis 4, bei der das Abstützelement (4) mit dem Bauteil (5, 6, 9, 11, 12, 500) des Fahrzeugs mittels zumindest einer Schraube verbunden ist.

6. Sicherheitseinrichtung gemäß einem der Ansprüche 1 bis 5, bei der das Abstützelement (4) mit dem Bauteil (5, 6, 9, 11, 12, 500) des Fahrzeugs durch Formschluss verbunden ist.

7. Sicherheitseinrichtung gemäß einem der Ansprüche 1 bis 6, bei der das Bauteil (5, 6, 9, 11, 12, 500) des Fahrzeugs in einer Fahrzeughöhenrichtung (Z) beabstandet von dem Lastpfaderweiterungselement (3) angeordnet ist.

8. Sicherheitseinrichtung gemäß einem der Ansprüche 1 bis 7, bei der das Bauteil (5, 6, 9, 11, 12, 500) des Fahrzeugs in einer Fahrzeugquerrichtung (Y) beabstandet von dem Lastpfaderweiterungselement (3) angeordnet ist.

9. Sicherheitseinrichtung gemäß einem der Ansprüche 1 bis 8, bei der das Lastpfaderweiterungselement (3) und das Abstützelement (4) aus einem Stück gebildet sind.

10. Sicherheitseinrichtung gemäß einem der Ansprüche 1 bis 9, bei der das Abstützelement (4) einen sich quer zu der Fahrzeuglängsrichtung (X) erstreckenden Verbindungsabschnitt (41) aufweist, und der Verbindungsabschnitt (41) flächig mit dem Lastpfaderweiterungselement (3) verbunden ist.

11. Fahrzeug, insbesondere Kraftfahrzeug, umfassend eine Sicherheitseinrichtung gemäß einem der Ansprüche 1 bis 10.

## Claims

1. A safety device for a vehicle, in particular a motor vehicle, comprising
a cross member (2),
a load path expansion element (3) attached to the cross member (2) and
a component (5, 6, 9, 11, 12, 500) of the vehicle differing from the load path expansion element (3), which is attached to the load path expansion element (3),
the load path expansion element (3) having a protruding section which is designed in such a way that, when used properly, in the event of a frontal impact of the vehicle with an obstacle (10) with a lateral overlap of the vehicle with the obstacle (10) within a predetermined range with respect to vehicle width, it absorbs an impact force occurring due to the frontal impact, and which protrudes out vis-à-vis the cross member (2) transversely to a vehicle longitudinal direction (X) in the direction of a lateral vehicle outer edge which is near to the obstacle (10), and
the safety device being designed in such a way that part of the absorbed impact force is channelled into the cross member (2) and another part of the absorbed impact force is channelled into the component (5, 6, 9, 11, 12, 500) of the vehicle, **characterised in that**
the safety device has a supporting element (4) which is attached to the load path expansion element (3) and the component (5, 6, 9, 11, 12, 500) of the vehicle and is designed in such a way that the other part of the absorbed impact force is transferred from the load path expansion element (3) to the component (5, 6, 9, 11, 12, 500) of the vehicle.

2. A safety device according to Claim 1, the component (5, 6, 9, 11, 12, 500) of the vehicle being attached to the load path expansion element (3) with screws or through positive locking or welding.

3. A safety device according to either of Claims 1 and 2, the component of the vehicle being a structural component of the vehicle formed as an engine mount (6, 9), a deformation element (5), a bumper crossmember, a support beam wheel arch (500), a structure strut (12), a post blocker (11) or a tie bar bearing.

4. A safety device according to one of Claims 1 to 3, the supporting element (4) being firmly attached to the protruding section of the load path expansion element (3).

5. A safety device according to one of Claims 1 to 4, the supporting element (4) being attached to the component (5, 6, 9, 11, 12, 500) of the vehicle with at least one screw.

6. A safety device according to one of Claims 1 to 5, the supporting element (4) being attached to the component (5, 6, 9, 11, 12, 500) of the vehicle through positive locking.

7. A safety device according to one of Claims 1 to 6, the component (5, 6, 9, 11, 12, 500) of the vehicle being arranged at a distance from the load path expansion element (3) in a vehicle vertical direction (Z).

8. A safety device according to one of Claims 1 to 7, the component (5, 6, 9, 11, 12, 500) of the vehicle being arranged at a distance from the load path expansion element (3) in a vehicle lateral direction (Y).

9. A safety device according to one of Claims 1 to 8, the load path expansion element (3) and the supporting element (4) being formed from a single piece.

10. A safety device according to one of Claims 1 to 9, the supporting element (4) having a connecting part (41) extending transversely to the vehicle longitudinal direction (X), and the connecting part (41) being connected face-to-face with the load path expansion element (3).

11. Vehicle, in particular a motor vehicle, comprising a safety device according to one of Claims 1 to 10.

## Revendications

1. Dispositif de sécurité destiné à un véhicule, en particulier à un véhicule automobile comprenant :
un support d'essieu (2),
un élément augmentant le chemin de charge (3) qui est relié au support d'essieu (2), et
un composant (5, 6, 9, 11, 12, 500) du véhicule distinct de l'élément augmentant le chemin de charge (3), qui est relié avec cet élément augmentant le chemin de charge (3),
l'élément augmentant le chemin de charge (3) comportant un segment en saillie qui est conçu de manière à permettre, lors d'une utilisation correcte, et en cas d'impact frontal du véhicule sur un obstacle (10), avec un chevauchement latéral du véhicule avec l'obstacle (10), dans une plage prédéfinie par rapport à la largeur de ce véhicule, d'absorber une force d'impact créée du fait du choc frontal, et, qui fait saillie par rapport au support d'essieu (2) transversalement à la direction longitudinale (X) du véhicule, en direction d'un bord latéral externe du véhicule situé à proximité par apport à l'obstacle (10), et
le dispositif de sécurité étant réalisé de sorte qu'une partie de la force d'impact absorbée soit transmise au support d'essieu (2) et qu'une autre partie de la force d'impact recueillie soit transmise au composant (5, 6, 9, 11, 12, 500) du véhicule,
**caractérisé en ce que**
le dispositif de sécurité comporte un élément d'appui (4) qui est relié à l'élément augmentant le chemin de charge (3) et au composant (5, 6, 9, 11, 12, 500) du véhicule et est réalisé pour transmettre l'autre partie de la force d'impact absorbée de l'élément augmentant le chemin de charge (3) au composant (5, 6, 9, 11, 12, 500) du véhicule.

2. Dispositif de sécurité conforme à la revendication 1,
dans lequel le composant (5, 6, 9, 11, 12, 500) du véhicule est relié à l'élément augmentant le chemin de charge (3) au moyen de vis, d'une liaison par la forme ou d'une liaison par soudage.

3. Dispositif de sécurité conforme à l'une des revendications 1 et 2, dans lequel le composant du véhicule est réalisé sous la forme d'un support de moteur (6, 9), sous la forme d'un élément de déformation (5), sous la forme d'un support transversal de pare-chocs, sous la forme d'une poutre de support de logement de roue (500), sous la forme d'une barre de structure (12), sous la forme d'un arrêt de colonne (11) ou sous la forme d'un palier de barre de traction.

4. Dispositif de sécurité conforme à l'une des revendications 1 à 3, dans lequel l'élément d'appui (4) est fixé solidairement sur le segment en saillie de l'élément augmentant le chemin de charge (3).

5. Dispositif de sécurité conforme à l'une des revendications 1 à 4, dans lequel l'élément d'appui (4) est relié au composant (5, 6, 9, 11, 12, 500) du véhicule au moyen d'au moins une vis.

6. Dispositif de sécurité conforme à l'une des revendications 1 à 5, dans lequel l'élément d'appui (4) est relié au composant (5, 6, 9, 11, 12, 500) du véhicule par une liaison par la forme.

7. Dispositif de sécurité conforme à l'une des revendications 1 à 6, dans lequel le composant (5, 6, 9, 11, 12, 500) du véhicule est situé à distance de l'élément augmentant le chemin de charge (3) dans la direction de la hauteur (Z) du véhicule.

8. Dispositif de sécurité conforme à l'une des revendications 1 à 7, dans lequel le composant (5, 6, 9, 11, 12, 500) du véhicule est situé à distance de l'élément augmentant le chemin de charge (3) dans la direction transversale (Y) du véhicule.

9. Dispositif de sécurité conforme à l'une des revendications 1 à 8, dans lequel l'élément augmentant le chemin de charge (3) et l'élément d'appui (4) sont réalisés en une seule pièce.

10. Dispositif de sécurité conforme à l'une des revendications 1 à 9, dans lequel l'élément d'appui (4) comporte un segment de liaison (41) s'étendant transversalement à la direction longitudinale (X) du véhicule, et le segment de liaison (41) est relié en surface avec l'élément augmentant le chemin de charge (3).

11. Véhicule en particulier véhicule automobile comprenant un dispositif de sécurité conforme à l'une des revendications 1 à 10.
